# EUROPEAN PATENT SPECIFICATION

(11) **EP 3 647 924 B1**
(45) Date of publication and mention of the grant of the patent: **23.02.2022**
(21) Application number: 19202603.7
(22) Date of filing: 10.10.2019
(51) Int. Cl.: H04N 5/232

(54) **ELECTRONIC DEVICE, METHOD FOR CONTROLLING ELECTRONIC DEVICE, PROGRAM, AND RECORDING MEDIUM**
ELEKTRONISCHE VORRICHTUNG, VERFAHREN ZUR STEUERUNG DER ELEKTRONISCHEN VORRICHTUNG, PROGRAMM UND AUFZEICHNUNGSMEDIUM
DISPOSITIF ÉLECTRONIQUE, PROCÉDÉ DE COMMANDE DE DISPOSITIF ÉLECTRONIQUE, PROGRAMME ET SUPPORT D'ENREGISTREMENT

(30) Priority: 30.10.2018 JP 2018204283
(43) Date of publication of application: 06.05.2020
(73) Proprietor: CANON KABUSHIKI KAISHA, Ohta-ku Tokyo 146-8501 (JP)
(72) Inventor: OKADA, Koichi, Ohta-ku, Tokyo 146-8501 (JP)
(74) Representative: Canon Europe Limited

(56) References cited:
- US-A1- 2016 139 738

## Description

### BACKGROUND OF THE INVENTION

### Field of the Invention

The present invention relates to an electronic device and a method for controlling an electronic device.

### Description of the Related Art

In recent years, in an electronic device, there has been a trend toward increasing the number of setting items for setting functions due to multifunctionalization of the electronic device. The larger the number of setting items is, the more likely the setting items influence each other. More specifically, there is a case where a user changes a setting of one setting item, whereby another setting item is automatically switched to a different setting, or a setting of another setting item is disabled. In such a case, there is a problem that the user cannot confirm the setting after the switching or the disabled setting.

In response to such a problem, a configuration has been considered in which the user is notified of a setting change, and inquired about how to handle the change. Japanese Patent Application Laid-Open No. 2006-229493 discusses an information processing apparatus that, if the broadcast times of more programs than the number of programs that can be simultaneously recorded overlap each other due to a fact that the broadcast time of a program that is a recording target is changed, inquires of a user about which program to record.

However, the more multifunctional the electronic device is, the larger the number of setting items that influence each other becomes. This increases the number of inquiries and causes the trouble of checking the inquiries. Further, there is also a problem in that even if an inquiry is checked, if a setting is a setting unintended by the user, it is troublesome to perform the operation of changing the setting to a desired setting.

US2016/139738 discloses an apparatus arranged to provide interactive settings and dependency adjustments to the settings. A user interface provides a user with the ability to configure device or application settings. Other dependent settings may change accordingly to a compatible setting while causing minimized impact to the use of the device or application. The user interface may be interactive such that visual indication of the changed dependent setting is provided to the user in an unobtrusive manner.

### SUMMARY OF THE INVENTION

The present invention is directed to a technique for easily checking an automatically corrected setting, and in a case where the setting is a setting unintended by a user, enabling the user to change the setting.

According to a first aspect of the present invention, there is provided an electronic device as specified in claim 1. According to a second aspect of the present invention, there is provided a method for controlling an electronic device as specified in claim 2. According to a third aspect of the present invention, there is provided a program as specified in claim 3. According to a fourth aspect of the present invention, there is provided a recording medium as specified in claim 4.

Further features of the present invention will become apparent from the following description of exemplary embodiments with reference to the attached drawings.

### BRIEF DESCRIPTION OF THE DRAWINGS

Fig. 1 is a block diagram illustrating a configuration of a digital video camera according to a first exemplary embodiment.
Fig. 2 is a diagram illustrating a configuration of a menu according to the first exemplary embodiment.
Figs. 3A, 3B, and 3C are diagrams illustrating a display form of the menu.
Figs. 4A, 4B, 4C, 4D, and 4E are diagrams illustrating screens where My Menu is displayed.
Figs. 5A and 5B are flowcharts illustrating processing according to the first exemplary embodiment.
Figs. 6A and 6B are tables illustrating setting values of setting items.
Fig. 7 is a diagram illustrating a correction confirmation screen according to the first exemplary embodiment.
Figs. 8A and 8B are flowcharts illustrating processes according to first and second examples.
Figs. 9A and 9B are flowcharts illustrating processes according to a third example.
Fig. 10 is a diagram illustrating a configuration of a menu according to a second exemplary embodiment.
Fig. 11 is a diagram illustrating a correction confirmation screen according to the second exemplary embodiment.

### DESCRIPTION OF THE EMBODIMENTS

Exemplary embodiments of the present invention will be described below with reference to the drawings.

In a first exemplary embodiment, a description is given using, as an example, a case where an electronic device is a digital video camera (hereinafter referred to as a "camera").

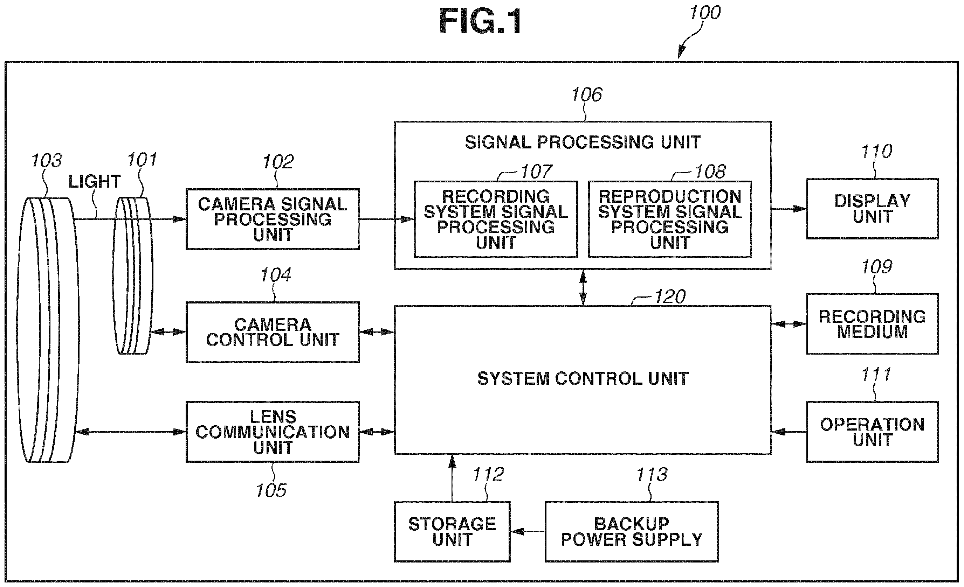

Fig. 1 is a block diagram illustrating an example of a configuration of a camera 100.

The camera 100 includes an image capturing unit 101, a camera signal processing unit 102, a lens 103, a camera control unit 104, a lens communication unit 105, a signal processing unit 106, a recording medium 109, a display unit 110, an operation unit 111, a storage unit 112, a backup power supply 113, and a system control unit 120.

The image capturing unit 101 includes an image sensor such as a charge-coupled device (CCD) sensor or a complementary metal-oxide-semiconductor (CMOS) sensor, and an autofocus mechanism. Based on an instruction from the camera control unit 104, the image capturing unit 101 adjusts the focus and the amount of light on an image sensing field, converts an optical image of the image sensing field formed through the lens 103 into a video signal, and transmits the video signal to the camera signal processing unit 102.

The camera signal processing unit 102 performs predetermined signal processing on a video signal and transmits the resulting signal to a recording system signal processing unit 107 of the signal processing unit 106.

Based on an instruction from the system control unit 120 or the operation unit 111, the camera control unit 104 controls the image capturing unit 101.

The lens communication unit 105 transmits information about the lens 103 to the system control unit 120.

The signal processing unit 106 includes an integrated circuit and a computer. Based on an instruction from the system control unit 120, the signal processing unit 106 performs recording in the recording medium 109 and performs the operation of reproducing a recorded video. The signal processing unit 106 includes a recording system signal processing unit 107 and a reproduction system signal processing unit 108. Based on an instruction from the system control unit 120, the signal processing unit 106 performs various types of recording/reproduction signal processing. The recording system signal processing unit 107 performs video compression on a signal output from the camera signal processing unit 102. A compressed video is transmitted to the recording medium 109 and recorded as a file under control of the system control unit 120. The reproduction system signal processing unit 108 performs predetermined processing on a signal output from the recording system signal processing unit 107, combines the video signal with character information and print range frame display information transmitted from the system control unit 120, and transmits the resulting signal to the display unit 110.

Based on a video signal, the display unit 110 displays a video various pieces of information using a character and a sign, and a guide when menu settings are made. As the display unit 110, for example, a liquid crystal panel can be used.

The operation unit 111 includes operation members such as a power switch, a menu key, and a four-way directional key (up/down/left/right/SET). If the menu key of the operation unit 111 is pressed, then in response to an instruction, the system control unit 120 requests the signal processing unit 106 to display a menu so that a menu screen is displayed in a superimposed manner on the video. A user moves a cursor on the menu screen using the four-way directional key of the operation unit 111 to change the setting of a desired item, whereby the system control unit 120 stores the setting of the item in the storage unit 112. As the storage unit 112, for example, a static random access memory (SRAM) can be used. The backup power supply 113 supplies power to the storage unit 112, and thus, the storage unit 112 can hold a setting of the changed item even if the camera 100 is turned off.

The system control unit 120 includes at least one processor and/or at least one circuit and controls the entire camera 100.

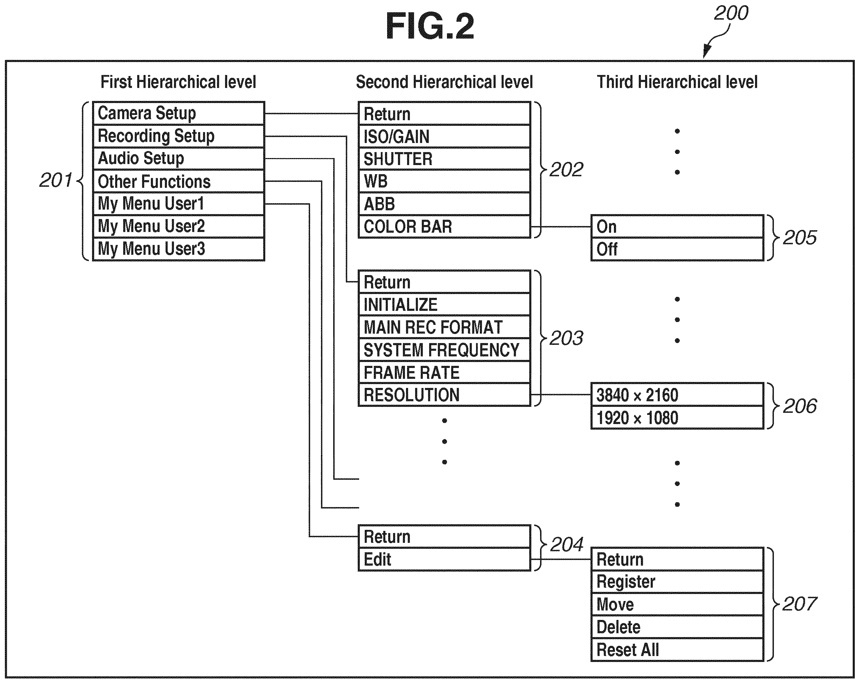

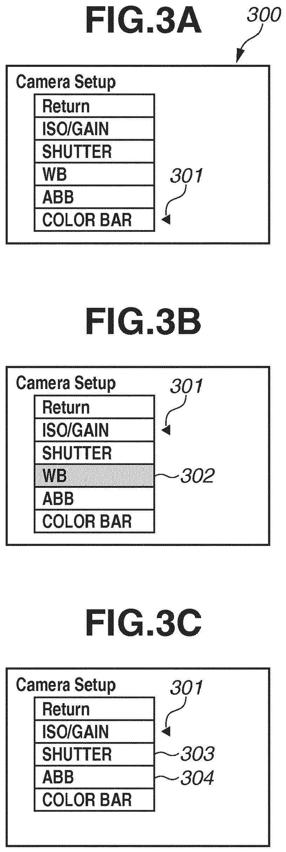

Fig. 2 is a diagram illustrating an example of a configuration of a menu 200 used in the camera 100. Figs. 3A, 3B, and 3C are diagrams illustrating examples of the display form of a menu screen 300 displayed on the display unit 110 of the camera 100.

The configuration of the menu 200 has a hierarchical structure where there is a second hierarchical level below a first hierarchical level, and there is a third hierarchical level below the second hierarchical level.

The first hierarchical level (the uppermost hierarchical level or the top hierarchical level) includes one group 201 constituted of a plurality of items. The group 201 includes items such as "Camera Setup", "Recording Setup", "My Menu User1", "My Menu User2", and "My Menu User3".

The second hierarchical level includes groups 202, 203, and 204, each constituted of a plurality of items. The group 202 includes items related to "Camera Setup". The group 203 includes items related to "Recording Setup". The group 204 includes items related to "My Menu User1".

The third hierarchical level includes groups 205, 206, and 207, each constituted of a plurality of items. The group 205 includes items related to "COLOR BAR". More specifically, the group 205 includes items for selecting whether to set "COLOR BAR". The group 206 includes items related to "RESOLUTION". More specifically, the group 206 includes items used for setting "RESOLUTION". The group 207 includes items related to "Edit". More specifically, the group 207 includes items required to make settings based on "Edit".

The menu key of the operation unit 111 is pressed, whereby the menu screen 300 as illustrated in Fig. 3A is displayed based on the configuration of the menu 200.

An operation on the menu screen 300 is performed by, for example, the user pressing the four-way directional key included in the operation unit 111. If the user operates the four-way directional key in the up direction, a cursor 301 on the menu screen 300 moves toward an upper item. Conversely, if the user operates the four-way directional key in the down direction, the cursor 301 moves toward a lower item. If the user operates the four-way directional key in the left direction, the cursor 301 moves to the upper hierarchical level if there is the upper hierarchical level. If the user operates the four-way directional key in the right direction, the cursor 301 moves to a lower hierarchical level if there is the lower hierarchical level, and for example, a setting screen constituted of items "On" and "Off" included in the group 205 opens. On the setting screen, the user moves the cursor 301 and presses the SET key of the four-way directional key on a desired item, whereby the setting value of the item is confirmed.

In Fig. 3A, items such as "Return", "ISO/GAIN", "SHUTTER", "WB (white balance)", "ABB (auto black balance)", and "COLOR BAR" are displayed. Hereinafter, among the items described above, an item to which the setting value can be set will be referred to as a "setting item". Thus, in Fig. 3A, "ISO/GAIN", "SHUTTER", "WB (white balance)", "ABB (auto black balance)", and "COLOR BAR" correspond to the setting items. On the other hand, an item to which the setting value cannot be set will be referred to simply as an "item". Thus, in Fig. 3A, "Return" is used to shift to an upper hierarchical level and corresponds to an item.

On the menu screen 300, basically, the setting item that can be used in the camera 100 is displayed. However, there is a setting item that cannot be temporarily used due to some restrictions or a setting item that does not change the operation even if the setting item is temporarily set. For example, in some specifications, in a case where a video of the camera 100 is dark because a cap is attached to the lens 103, "WB" is not allowed to be set. In this case, if "WB" is allowed to be set, the specifications of the actual camera 100 do not match the configuration of the menu screen 300. Thus, to cause the user to recognize that such a setting item cannot be temporarily used, the system control unit 120 displays the setting item that cannot be temporarily used in a grayed-out manner.

In Fig. 3B, to allow the user to recognize that "WB" cannot be temporarily used, "WB" 302 is displayed in the grayed-out manner. As described above, by indicating that the setting item cannot be temporarily used in a manner that allows the user to recognize that the setting item cannot be temporarily used, it is possible to prevent confusion for the user.

The setting item may not only be displayed in the grayed-out manner but also be hidden so that the user cannot select the setting item.

In Fig. 3C, "WB" located between "SHUTTER" 303 and "ABB" 304 is hidden. In a case where the setting item is displayed in the grayed-out manner, it is effective in indicating that the setting item cannot be temporarily used. On the other hand, in a case where the setting item is hidden, it is effective in indicating that the setting item is not present. The case where the setting item is not present corresponds to, for example, a case where the setting item cannot be used unless the function of the setting item is extended as an option.

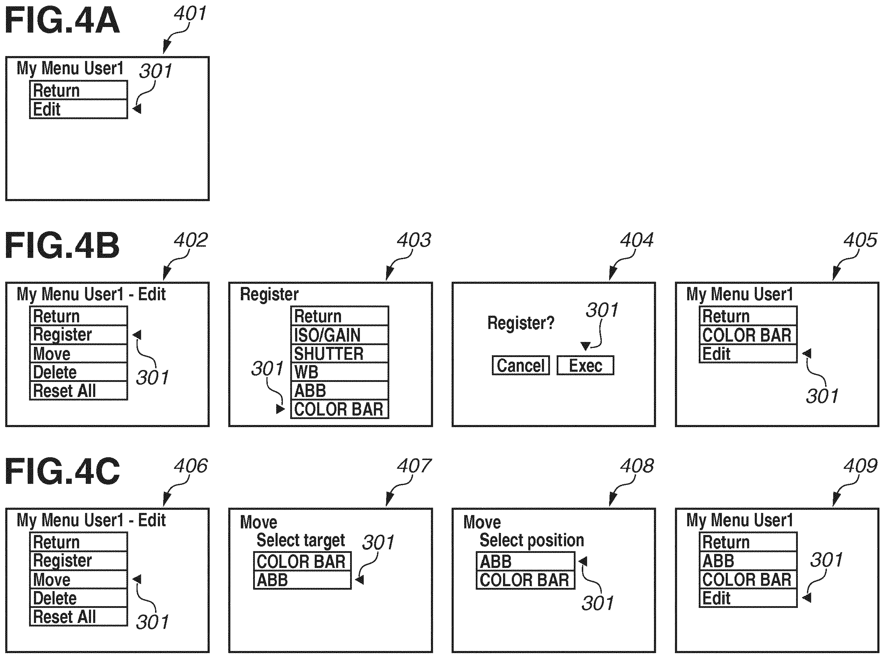

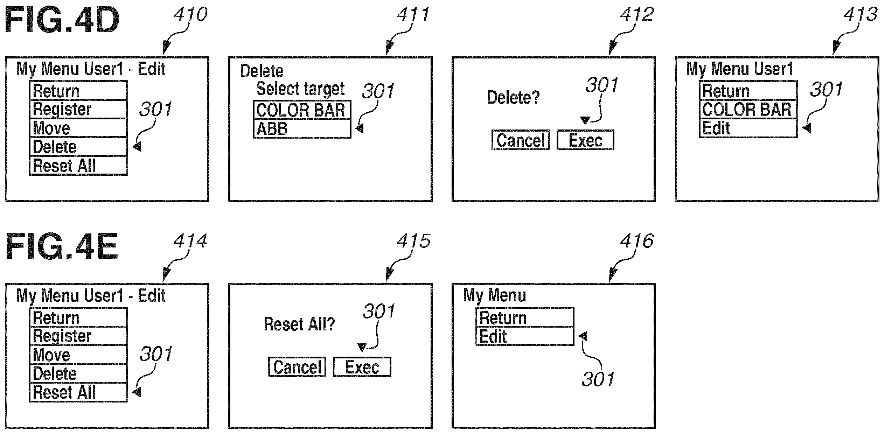

Next, a configuration of My Menu is described with reference to Figs. 4A, 4B, 4C, 4D, and 4E.

My Menu is a function for quickly setting the setting item that is frequently used by the user by registering the setting item frequently used from among the setting items in the menu 200. My Menu may also be referred to as, for example, a "custom menu" or "favorites".

Fig. 4A is a diagram illustrating an example of a screen 401 displayed when the group 201, which is at the first hierarchical level, is displayed in the state where no setting item is registered in My Menu and where "My Menu User1" is selected. In this state, items "Return" and "Edit" are displayed, and the group 204, which is at the second hierarchical level in Fig. 2, is displayed.

The item "Return" is an item for shifting to an upper hierarchical level. If the user moves the cursor 301 to "Return" and performs a confirmation operation, the screen 401 shifts to the first hierarchical level. The item "Edit" is an item for shifting to a lower hierarchical level to register the setting item in My Menu. The user moves the cursor 301 to "Edit" and presses the right key of the four-way directional key or the SET key of the four-way directional key to shift to the lower hierarchical level.

First, a case is described where the user registers a desired setting item in My Menu.

Fig. 4B is a diagram illustrating an example of a screen 402 displayed when the screen 401 shifts to the lower hierarchical level through "Edit". On this screen 402, items "Return", "Register", "Move", "Delete", and "Reset All" are displayed.

As described above, the item "Return" is an item for shifting to an upper hierarchical level. The item "Register" is an item for registering a setting item in My Menu. By the user moving the cursor 301 to "Register" and performing a confirmation operation, a Register screen 403 for selecting a setting item to be registered in My Menu is displayed. The Register screen 403 has a configuration similar to that of a normal menu screen. However, on the Register screen 403, a setting item that cannot be registered in My Menu is not displayed. The user selects a setting item that the user wants to register, and a Register confirmation screen 404 is displayed. If the user selects "Cancel", the setting item is not registered. If the user selects "Exec", the setting item is registered. For example, if "My Menu User1" is selected after the setting item "COLOR BAR" is registered, a My Menu screen 405 including the setting item "COLOR BAR" is displayed.

Next, a case is described where the setting item registered in My Menu is rearranged.

Similarly to Fig. 4B, Fig. 4C is a diagram illustrating an example of a screen 406 displayed when the screen 401 shifts to the lower hierarchical level through "Edit".

By the user moving the cursor 301 to "Move" and performing a confirmation operation, a Move target selection screen 407 for rearranging the setting item is displayed. By the user moving the cursor 301 to a setting item to be rearranged and performing a confirmation operation, the setting item to be rearranged is selected, and a Move target movement screen 408 is displayed. By the user operating the up/down key of the four-way directional key, the selected setting item moves. Then, by the user ultimately performing a confirmation operation, the movement destination is determined, and a My Menu screen 409 after a "Move" is displayed.

Next, a case is described where the setting item registered in My Menu is deleted.

Similarly to Fig. 4B, Fig. 4D is a diagram illustrating an example of a screen 410 displayed when the screen 401 shifts to the lower hierarchical level through "Edit".

By the user moving the cursor 301 to "Delete" and performing a confirmation operation, a Delete target selection screen 411 for selecting a deletion target is displayed. The user moves the cursor 301 to a setting item to be deleted and performs a confirmation operation, whereby the setting item to be deleted is selected, and a Delete confirmation screen 412 is displayed. If the user selects "Cancel", the setting item is not deleted. If the user selects "Exec", the setting item is deleted. For example, the setting item "ABB" is deleted, whereby a My Menu screen 413 after the deletion is displayed.

Next, a case is described where setting items registered in my menu are collectively deleted.

Similarly to Fig. 4B, Fig. 4E is a diagram illustrating an example of a screen 414 displayed when the screen 401 shifts to the lower hierarchical level through "Edit".

By the user moving the cursor 301 to "Reset All" and performing a confirmation operation, a Reset All confirmation screen 415 for collectively deleting setting items is displayed. If the user selects "Cancel", the setting items are not collectively deleted. If the user selects "Exec", the setting items are collectively deleted. If the setting items are collectively deleted, a my menu screen 416 after the execution of "Reset All", where no setting item is registered, is displayed.

Next, a description is given of a setting change process executed by the camera 100 when the user changes the setting value of the setting item on the menu screen 300.

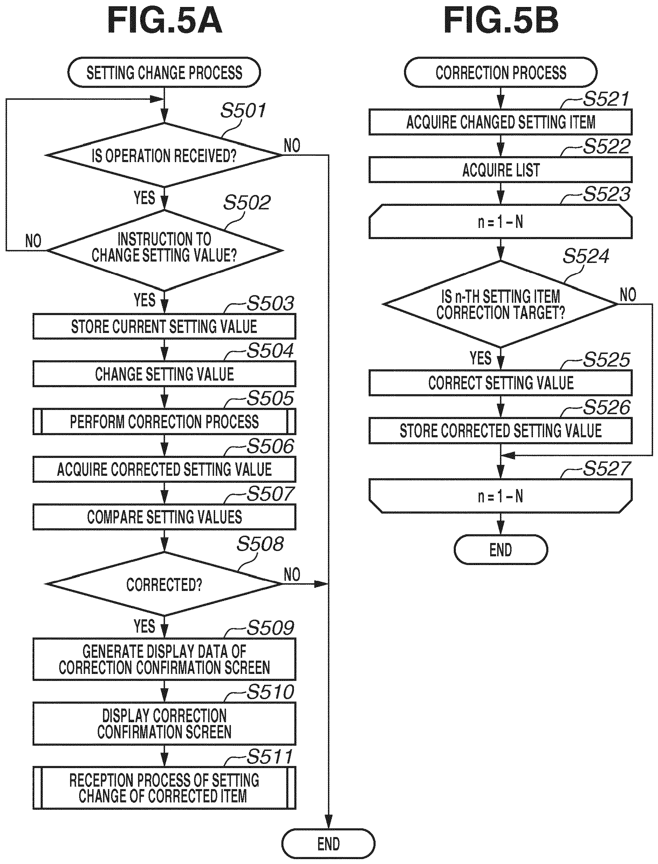

Figs. 5A and 5B are flowcharts illustrating an example of the setting change process according to the present exemplary embodiment. The flowcharts in Figs. 5A and 5B can be implemented by the system control unit 120 loading a program stored in the recording medium 109 to the storage unit 112 and executing the program.

In step S501, the system control unit 120 determines whether an operation of the user is received, i.e., whether a key input is provided to the operation unit 111. If the operation is received (YES in step S501), the processing proceeds to step S502. If the operation is not received (NO in step S501), the processing ends.

In step S502, the system control unit 120 determines whether the received operation is an instruction to change the setting value of the setting item. If the received operation is not the instruction to change the setting value (NO in step S502), the processing returns to step S501. If the received operation is the instruction to change the setting value (YES in step S502), the processing proceeds to step S503. This corresponds to, for example, a case where the user performs the operation of selecting the setting item and changing the setting of the setting item in the state where the menu screen 300 is displayed. For example, in the state where the top hierarchical level (first hierarchical level) is displayed on the menu screen 300, the item "Recording Setup" is selected. Then, in the state where the second hierarchical level (group 203) is displayed, the item "RESOLUTION" is selected. If the operation of selecting any of options (group 206) that are subsequently displayed is performed, it is determined that an instruction to change the setting value of the setting item is given. The operation is not limited to an operation performed in the state where the menu screen 300 is displayed. For example, if a shortcut button included in the operation unit 111 for changing the setting of "Recording Setup" is operated on an image capturing standby screen where a live view image is displayed, it may be determined that the instruction to change the setting value of the setting item is given.

In step S503, the system control unit 120 temporarily stores the current setting value (the setting value before a setting change that is set before the change instruction received in step S502) in the storage unit 112.

In step S504, based on the instruction from the user, the system control unit 120 changes the setting value of the setting item. This process corresponds to an example of processing by a change unit. The system control unit 120 stores the changed setting item and setting value in the storage unit 112.

In step S505, the system control unit 120 performs a correction process. The correction process refers to a process of correcting a setting value of another setting item in response to the change in the setting value.

Fig. 5B is a flowchart illustrating an example of the correction process in step S505.

In step S521, the system control unit 120 acquires the setting item serving as a trigger for performing the correction process. More specifically, the system control unit 120 reads the setting item stored in step S504 from the storage unit 112.

In step S522, the system control unit 120 acquires setting items to be candidates for correction targets and the number of items N. More specifically, the system control unit 120 acquires a list of setting items to be checked to see whether the setting items are to be corrected, and the number of setting items included in the list. The setting items included in the list may be all of the setting items. In a case where correction targets are limited depending on the changed setting value, the setting items included in the list may be setting items corresponding to the changed setting value. The list is stored, for example, in the recording medium 109 in advance.

Next, in steps S523 to S527, the correction process is actually performed. At this time, so that a case can be handled where there is a plurality of setting items as candidates for correction targets, the correction process is performed in a loop constituted of steps S523 to S527.

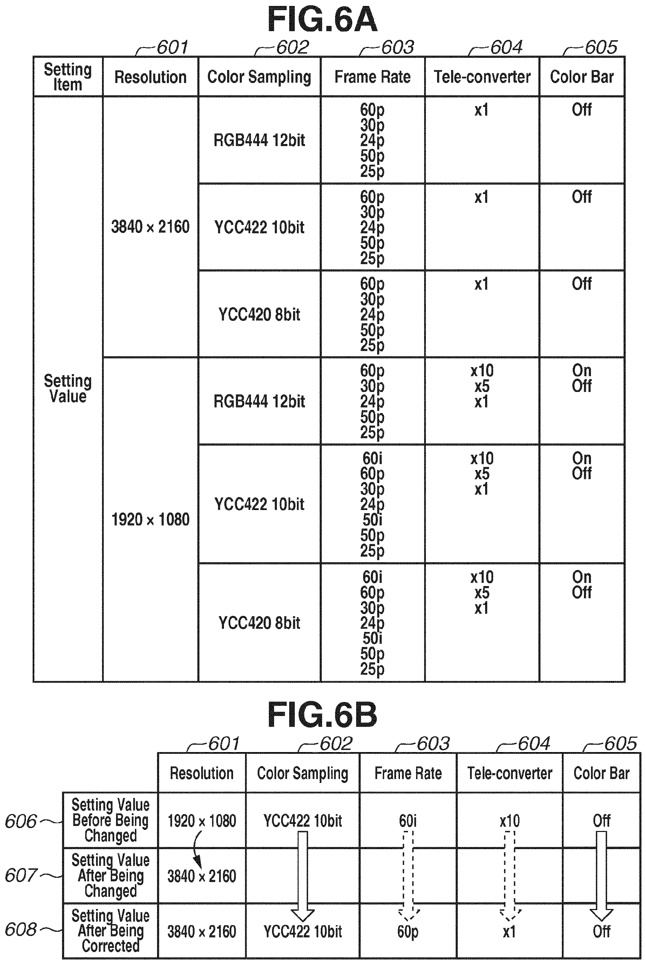

In step S524, the system control unit 120 determines whether an n-th setting item that is a candidate for the correction target is a correction target. More specifically, the system control unit 120 determines whether the setting value of the n-th setting item in the list needs to be corrected. If the setting value of the n-th setting item needs to be corrected, it is determined that the n-th setting item is a correction target. A method for determining whether the setting value of the n-th setting item needs to be corrected will be described below with reference to Figs. 6A and 6B. If the n-th setting item is not the correction target (NO in step S524), the processing proceeds to step S527. The processes are repeated until n reaches the number of items N. On the other hand, if the n-th setting item is the correction target (YES in step S524), the processing proceeds to step S525.

In step S525, the system control unit 120 corrects the setting value of the n-th setting item. This process corresponds to an example of processing by a correction unit. The specific method for correcting the setting value will be described below with reference to Figs. 6A and 6B.

In step S526, the system control unit 120 stores the corrected setting value in the storage unit 112. As described above, in steps S523 to S527, the processes are repeated as many times as the number of items N that are correction targets.

With reference to Figs. 6A and 6B, the specific correction method is described.

Fig. 6A is a table illustrating examples of setting values that can be set for the setting items used in the camera 100. The table illustrated in Fig. 6A is stored, for example, in the recording medium 109 in advance.

The description is given taking "Resolution" 601, "Color Sampling" 602, "Frame Rate" 603, "Tele-converter" 604, and "Color Bar" 605 as examples of the setting items.

The setting item "Resolution" 601 is for setting the resolution of a video. As the setting value of "Resolution" 601, "3840 × 2160" and "1920 × 1080" can be set. Further, "Resolution" 601 is a setting item corresponding to the first item (n = 1) in step S523 described above in the correction process.

The setting item "Color Sampling" 602 is for setting components of a signal constituted of luminance and coloring matter. As the setting value of "Color Sampling" 602, "RGB444 12bit" can be set. Further, "Color Sampling" 602 is the setting item corresponding to the second item (n = 2) in the correction process.

The setting item "Frame Rate" 603 is for setting the number of frames of the video per second. As the setting value of "Frame Rate" 603, "60p", "30p", "24p", "50p", and "25p" can be set. Further, "Frame Rate" 603 is the setting item corresponding to the third item (n = 3) in the correction process.

The setting item "Tele-converter" 604 is for setting a magnification for enlarging a video signal input to the recording system signal processing unit 107. As the setting value of "Tele-converter" 604, "×10", "×5", and "×1" can be set. Further, "Tele-converter" 604 is the setting item corresponding to the fourth item (n = 4) in the correction process.

The setting item "Color Bar" 605 is for turning on and off the output of a color bar signal. As the setting value of "Color Bar" 605, "On" or "Off" can be set. Further, "Color Bar" 605 is the setting item corresponding to the fifth item (n = 5) in the correction process.

The setting items described above have such relationships in which a change in one of the setting values of the setting items mutually influences the setting value of another setting item. More specifically, if one setting value is changed, the setting value of a different setting item cannot be freely set, and a setting value that can be set thereto is limited. For example, looking at a case where the setting value of the setting item "Resolution" 601 is "1920 × 1080". In this case, as the setting value of the setting item "Tele-converter" 604, any of "×10", "×5", and "×1" can be set. If the setting value of the setting item "Resolution" 601 is changed to "3840 × 2160", the setting value of the setting item "Tele-converter" 604 can only be set to "×1". Thus, if the setting value of one setting item is changed, the setting value of another setting item cannot be retained as it is and needs to be corrected.

Fig. 6B is a table illustrating relationships between a setting value 606 before being changed, a setting value 607 after being changed, and a setting value 608 after being corrected of each setting item.

In this case, the current setting is set to the setting value 606 before being changed illustrated in Fig. 6B. More specifically, the setting value of the setting item "Resolution" 601 is "1920 × 1080". The setting value of the setting item "Color Sampling" 602 is "YCC422 10bit". The setting value of the setting item "Frame Rate" 603 is "60i". The setting value of the setting item "Tele-converter" 604 is "x10". Further, the setting value of the setting item "Color Bar" 605 is "Off". Thus, in step S503, as the current setting value, the setting value 606 before being changed illustrated in Fig. 6B is stored.

Next, in this case, the user gives an instruction to change the setting value of the setting item "Resolution" 601 to "3840 × 2160". Thus, in step S504, the setting value 606 is changed to the setting value 607 after being changed as illustrated in Fig. 6B. In addition, the setting item acquired in step S521 is "Resolution" 601.

In step S524, the system control unit 120 starts the correction process from "Resolution" 601, which is the first setting item. However, "Resolution" 601 is the changed setting item itself. Thus, the system control unit 120 does not determine that the setting item "Resolution" 601 is a correction target, and the determination is NO in step S524.

Next, in step S524, the system control unit 120 starts the correction process on "Color Sampling" 602, which is the second setting item. In the table in Fig. 6A, regarding the setting value 606 before being changed "1920 × 1080" of the setting item "Resolution" 601, the setting value "YCC422 10bit" of the setting item "Color Sampling" 602 is present. Further, in the table in Fig. 6A, regarding the setting value after a change "3840 × 2160" of the setting item "Resolution" 601, the setting value "YCC422 10bit" of the setting item "Color Sampling" 602 is present. More specifically, both before and after the setting value of the setting item "Resolution" 601 is changed, "YCC422 10bit", which is the setting value at the current time, is present for the setting item "Color Sampling" 602.

Thus, with reference to Fig. 6A, the system control unit 120 determines that even if the setting value of the setting item "Resolution" 601 is changed, the setting value of the setting item "Color Sampling" 602 does not need to be corrected. Thus, the system control unit 120 does not determine that the setting item "Color Sampling" 602 is a correction target, and the determination is NO in step S524.

Next, in step S524, the system control unit 120 starts the correction process on "Frame Rate" 603, which is the third setting item. In this case, in the table in Fig. 6A, regarding the setting value 607 after being changed "3840 × 2160" of the setting item "Resolution" 601, the setting value "60i" at the current time is not present for the setting item "Frame Rate" 603, and the setting value "60i" cannot be retained.

Thus, with reference to Fig. 6A, the system control unit 120 determines that the setting value of the setting item "Frame Rate" 603 needs to be corrected. Thus, the system control unit 120 determines that the setting item "Frame Rate" 603 is a correction target, and the determination is YES in step S524.

In step S525, the system control unit 120 corrects the setting value of the setting item "Frame Rate" 603. In Fig. 6A, regarding the setting value 607 after being changed "3840 × 2160" of the setting item "Resolution" 601, "60p", "30p", "24p", "50p", and "25p" are present as candidates that correct the setting value of the setting item "Frame Rate" 603. In this case, priority is given in order of "60p", "30p", "24p", "50p", and "25p", and the system control unit 120 corrects the setting value of the setting item "Frame Rate" 603 to "60p". Next, in step S526, the system control unit 120 stores the corrected setting value.

Next, in step S524, the system control unit 120 starts the correction process on "Tele-converter" 604, which is the fourth setting item. In this case, in the table in Fig. 6A, regarding the setting value 607 after being changed "3840 × 2160" of the setting item "Resolution" 601, the setting value "x10" at the current time is not present for the setting item "Tele-converter" 604.

Thus, the system control unit 120 determines that the setting value of the setting item "Tele-converter" 604 needs to be corrected. Thus, the system control unit 120 determines that the setting item "Tele-converter" 604 is a correction target, and the determination is YES in step S524.

In step S525, the system control unit 120 corrects the setting value of the setting item "Tele-converter" 604. In Fig. 6A, regarding the setting value 607 after being changed "3840 × 2160" of the setting item "Resolution" 601, only "×1" is present as a candidate that corrects the setting value of the setting item "Tele-converter" 604. Thus, the system control unit 120 corrects the setting value of the setting item "Tele-converter" 604 to "×1". Next, in step S526, the system control unit 120 stores the corrected setting value.

Next, in step S524, the system control unit 120 starts the correction process on "Color Bar" 605, which is the fifth setting item. In this case, in the table in Fig. 6A, regarding the setting value 607 after being changed "3840 × 2160" of the setting item "Resolution" 601, the setting value "Off" at the current time is present for the setting item "Color Bar" 605.

Thus, with reference to Fig. 6A, the system control unit 120 determines that even if the setting value of the setting item "Resolution" 601 is changed, the setting value of the setting item "Color Bar" 605 does not need to be corrected. Thus, the system control unit 120 does not determine that the setting item "Color Bar" 605 is a correction target, and the determination is NO in step S524.

At this time, the processes of steps S523 to S527 are completed regarding all the setting items where n is 1 to 5, whereby the setting values are corrected as in the setting value 608 after being corrected illustrated in Fig. 6B. More specifically, the setting value of the setting item "Frame Rate" 603 is corrected from "60i" to "60p", and the setting value of the setting item "Tele-converter" 604 is corrected from "×10" to "×1".

If the processes of steps S523 to S527 are completed regarding all the setting items, the processing returns to the flowchart in Fig. 5A and proceeds to step S506.

In the processes of steps S523 to S527, the correction process is executed on the setting items in ascending order of the number n. At this time, the number n functions as the priority order of the setting items. More specifically, to correct the setting value of the setting item having a large number n, i.e., given a lower priority, the system control unit 120 corrects the setting value in a range where a change in the setting value of the setting item having a smaller number n, i.e., given a higher priority, is not involved. Thus, the system control unit 120 stores a setting item that needs to be given a high priority in association with a small number. If there is a setting item to which the user wants to give a high priority, the user can select the setting item to be given the high priority so that the system control unit 120 can store the selected setting item in association with a small number n.

Referring back to the flowcharts in Figs. 5A and 5B, in step S506, the system control unit 120 acquires the setting value after being subjected to the correction process. More specifically, regardless of the presence or absence of the correction process, the system control unit 120 reads the setting value stored in step S526.

In step S507, the system control unit 120 compares the setting value before the instruction to change the setting value is given, with the setting value after being subjected to the correction process. At this time, the setting value before the instruction to change the setting value is given refers to the setting value stored in the storage unit 112 in step S503. Thus, the system control unit 120 compares the setting value temporarily stored in step S503 with the latest setting value after being subjected to the correction process that is read in step S506.

In step S508, the system control unit 120 determines whether the setting value is corrected. More specifically, as a result of the comparison between the setting values in step S507, the system control unit 120 determines whether the setting values are different from each other. If the setting values are different from each other, the setting value is corrected (YES in step S508). Thus, the processing proceeds to step S509. If the setting values are the same, the setting value is not corrected (NO in step S508). Thus, the processing ends.

In step S509, based on the corrected setting value, the system control unit 120 generates display data of a correction confirmation screen.

In step S510, the system control unit 120 displays the generated correction confirmation screen on the display unit 110. This process corresponds to an example of processing by a display control unit.

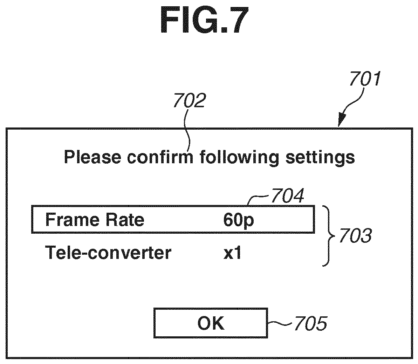

Fig. 7 is a diagram illustrating an example of a correction confirmation screen 701. At this time, the corrected setting value is displayed in a menu format. The correction confirmation screen 701 includes a message 702, list display 703 of corrected setting values, a selection frame 704, and an OK button 705.

The message 702 includes text describing a purpose of displaying the correction confirmation screen 701. More specifically, the message 702 states that the user is requested to confirm whether the corrected setting value is corrected against the user's intention. However, the message 702 may also include a content indicating that the setting value of the setting item is automatically corrected.

If there is a plurality of setting values of corrected setting items, the list display 703 collectively displays the plurality of setting values. The list display 703 illustrated in Fig. 7 includes the setting item "Frame Rate" and the corrected setting value "60p", and the setting item "Tele-converter" and the corrected setting value "×1". Based on the latest setting value after being subjected to the correction process that is read in step S506, the system control unit 120 can generate display data of the list display 703. In this case, since two corrected setting values are present, the system control unit 120 displays the two setting values in a list. On the other hand, if one corrected setting value is present, only the one setting value is displayed. If three or more corrected setting values are present, all the three or more setting values are displayed in a list.

The selection frame 704 is a display item for individually selecting the setting value displayed in the list display 703. The user can move the selection frame 704 by operating the up and down directional keys of the four-way directional key of the operation unit 111 to select the setting value displayed in the list display 703. The display item is not limited to the selection frame 704 and may also be a cursor as long as the item allows the selection of the setting value.

The OK button 705 is a display item for giving an instruction to finish changing of the setting value displayed on the correction confirmation screen 701. An operation when the OK button 705 is pressed differs depending on specifications of the menu. The OK button 705 is not essential and can be appropriately placed according to the exemplary embodiments described below.

As described above, in a case where there is a plurality of corrected setting values, the plurality of setting values is collectively displayed, whereby the user can easily confirm the corrected setting values.

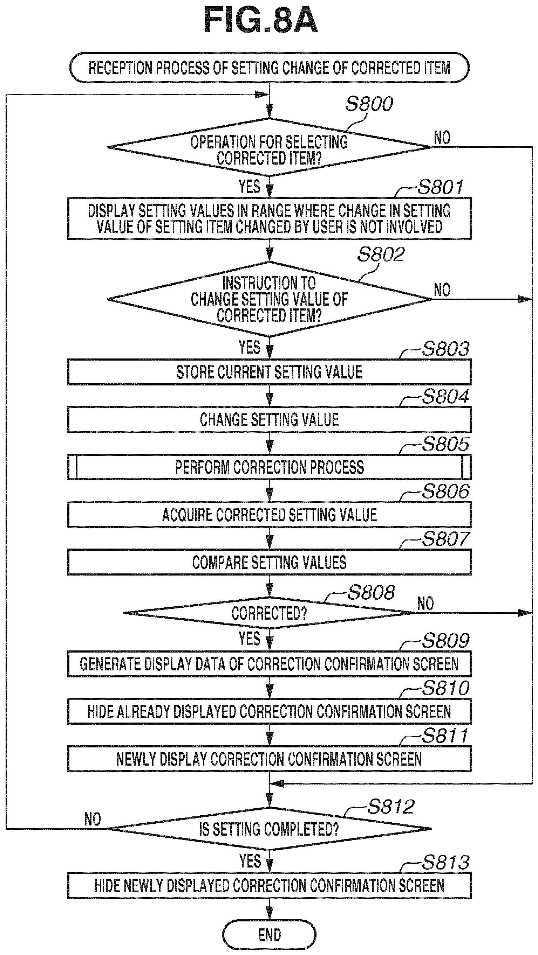

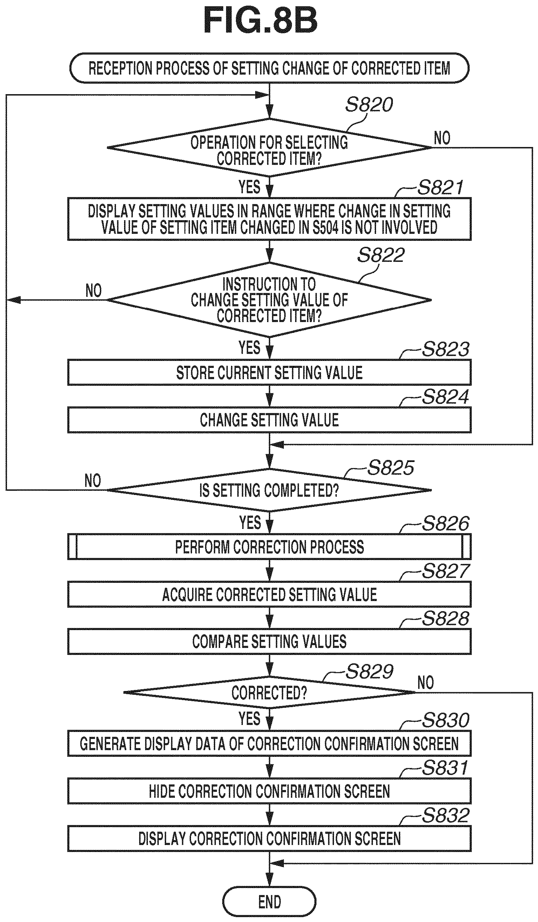

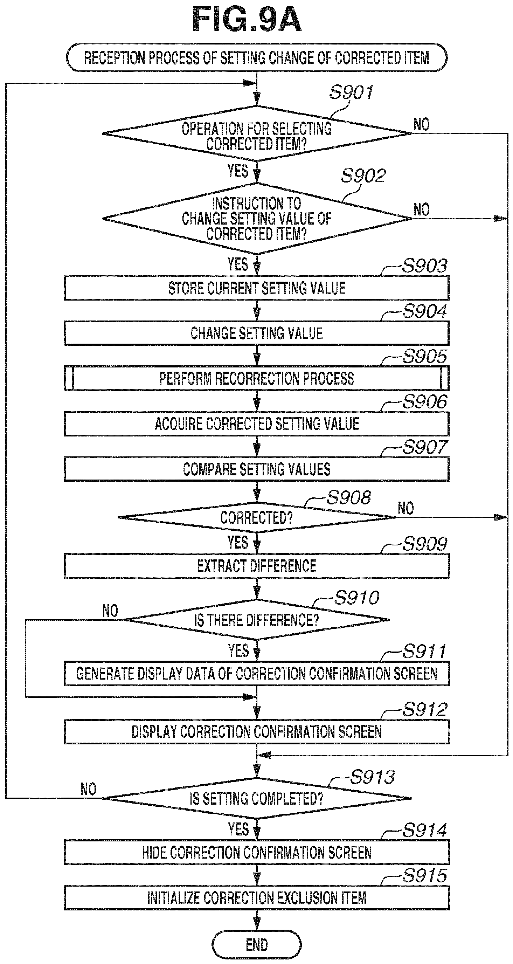

In step S511, the system control unit 120 receives a user operation for changing the setting of the corrected setting item (corrected item) displayed on the correction confirmation screen 701. This process will be described below with reference to Figs. 8A, 8B, and 9A. Through this process, if any of the setting values displayed in the list display 703 is corrected to a setting value unintended by the user, the user can directly change the corrected setting value on the correction confirmation screen 701.

At this time, among the setting values displayed in the list display 703, a setting value that can be changed by the user and a setting value that cannot be changed by the user may be displayed in a distinguishable manner. More specifically, the system control unit 120 can display the setting value that cannot be changed in a grayed-out manner. Alternatively, the system control unit 120 can hide the setting value that cannot be changed by the user among the setting values displayed in the list display 703. Depending on the purpose of the control, it is possible to appropriately set whether to display the setting value that cannot be changed in a grayed-out manner or to hide the setting value that cannot be changed.

The setting value that cannot be changed corresponds to, for example, the setting item "Tele-converter" in a case where, as described above, only "×1" is present as a candidate that corrects the setting value of the setting item "Tele-converter" when the setting value of the setting item "Resolution" is changed to "3840 × 2160". In this case, if the setting value of the setting item "Tele-converter" is changed to a setting value other than "×1", the setting value of the setting item "Resolution" changed by the user cannot be retained. Thus, the corrected setting value is allowed to be changed in a range where a change in the setting value of the setting item changed by the user is not involved, thereby preventing the setting value changed by the user from being changed against the user's intention.

More specifically, in steps S525 and S526, if only one candidate that corrects the setting value is present, the system control unit 120 stores the corrected setting value in association with information indicating that the setting value cannot be changed. Next, in step S509, the system control unit 120 generates display data in which the setting value, which is stored in association with the information indicating that the setting value cannot be changed, is grayed out or hidden.

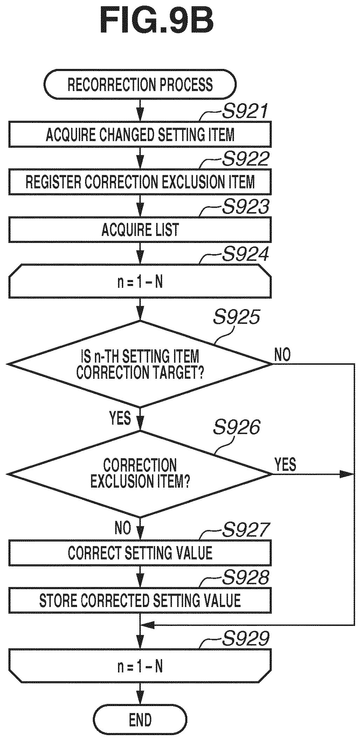

The reception process of a setting change of a corrected item in step S511 is described as first to third processes with reference to Figs. 8A, 8B, and 9A, respectively. Fig. 9B is a detailed flowchart of step S905 included in a flowchart in Fig. 9A. This includes a process in which the user can directly change a corrected setting value on the correction confirmation screen 701 illustrated in Fig. 7 as described above. The flowcharts in Figs. 8A, 8B, 9A, and 9B can be implemented by the system control unit 120 loading a program stored in the recording medium 109 into the storage unit 112 and executing the program.

### (First Process)

Fig. 8A is a first process of the reception process of the setting change of the corrected item and is a detailed flowchart of step S511. The first process is a process in which, if a user further changes a setting value on the correction confirmation screen 701, another setting value corrected due to the change in the setting value is displayed using the correction confirmation screen 701 again.

In step S800, the system control unit 120 determines whether a user operation for selecting a corrected item that can be changed is performed in the state where the correction confirmation screen 701 is displayed. More specifically, the system control unit 120 determines whether the operation of selecting a setting value that can be changed by the user from among the setting values displayed in the list display 703 (the setting values of corrected items) is performed. If the user operation of selecting a corrected item that can be changed is performed (YES in step S800), the processing proceeds to step S801. If not (NO in step S800), the processing proceeds to step S812.

In step S801, the system control unit 120 selectably displays, among candidates (options) for the setting value of the selected corrected item, setting values in a range where a change in the setting value of the setting item changed by the user is not involved. More specifically, the system control unit 120 selectably displays setting values in the range where a change in the setting value changed in step S504 is not involved. Further, the system control unit 120 selectably displays setting values in the range where a change in the setting value changed in step S804 (setting value changed in the process of step S804 by the user directly selecting the setting value before the processing loops and reaches step S801) is not involved. For example, in this case, the user moves the selection frame 704 and selects and determines the setting value "60p" of the setting item "Frame Rate" from among the setting values displayed in the list display 703. In this case, the system control unit 120 selectably displays, from among the setting values included in the item "Frame Rate" in the group 203 at the second hierarchical level in the menu 200 illustrated in Fig. 2, setting values in the range where the change in the setting value of the setting item changed by the user themselves is not involved. For example, there is a case where the user gives an instruction to change the setting value of the setting item "Resolution" 601 to "3840 × 2160" in step S502, and the setting value is set thereto in step S504. At this time, with reference to Fig. 6A, regarding the setting value "3840 × 2160" of the setting item "Resolution" 601, the setting values "60p", "30p", "24p", "50p", and "25p" are present for the setting item "Frame Rate". On the other hand, the setting values "60i" and "50i" are not present. Thus, with reference to Fig. 6A, the system control unit 120 displays the setting values "60p", "30p", "24p", "50p", and "25p" as selectable setting values among the setting values included in "Frame Rate". On the other hand, the system control unit 120 does not selectably display the setting values "60i" and "50i", with which the setting value "3840 × 2160" of the setting item "Resolution" will be changed, and grays out or hides the setting values "60i" and "50i".

In step S802, the system control unit 120 determines whether an operation of selecting any of the options selectably displayed in step S801 is performed, i.e., an instruction to change the setting value of a corrected item is given. If an instruction operation for changing the setting of the corrected item is performed (YES in step S802), the processing proceeds to step S803. If not (NO in step S802), the processing proceeds to step S812.

In step S803, the system control unit 120 temporarily stores the current setting value (setting value before the instruction to change the setting of the corrected item is received in step S802) in the storage unit 112. More specifically, if it is the first process of step S803 after the processing in Fig. 8A is started, the setting value 608 after being corrected for the first time in Fig. 6B (corrected by the correction process in step S505) is stored.

In step S804, in response to the instruction to change the setting of the corrected item received in step S802, the system control unit 120 changes the setting value. The process corresponds to an example of processing by a control unit.

In step S805, the system control unit 120 performs a correction process. To this process, the flowchart in Fig. 5B can be applied. Thus, the setting item changed in step S804 is not a correction target. In addition, since only the setting values in a range where a change in the setting value of the setting item changed by the user is not involved are the options in the process of step S801, the setting item changed in step S504 is not corrected. The correction process is performed in the priority order of the setting items.

In step S806, the system control unit 120 acquires the setting value after being subjected to the correction process.

In step S807, the system control unit 120 compares the setting value before the instruction to change the setting value is given, with the setting value after being subjected to the correction process. At this time, the setting value before the instruction to change the setting value is given refers to the setting value temporarily stored in the storage unit 112 in step S803.

In step S808, the system control unit 120 determines whether the setting value is corrected. If the setting value is corrected (YES in step S808), the processing proceeds to step S809. If the setting value is not corrected (NO in step S808), the processing proceeds to step S812.

In step S809, based on the newly corrected setting value, the system control unit 120 generates display data of a correction confirmation screen.

In step S810, the system control unit 120 hides the already displayed correction confirmation screen 701. More specifically, the system control unit 120 cancels display of the correction confirmation screen 701 illustrated in Fig. 7 that has been displayed from step S510. Then, the system control unit 120 prepares for display of a new correction confirmation screen.

In step S811, the system control unit 120 newly displays a correction confirmation screen on the display unit 110. More specifically, the system control unit 120 displays the correction confirmation screen generated in step S809 so as to replace the correction confirmation screen that has been displayed from step S510. At this time, a screen similar to that in Fig. 7 can be applied to the correction confirmation screen. Thus, if a plurality of corrected setting values is present, the plurality of setting values is collectively displayed in a list.

In step S812, the system control unit 120 determines whether the setting is completed. More specifically, the system control unit 120 determines whether the user has selected an OK button on the correction confirmation screen displayed in step S811. If the OK button has been selected, it is determined that the setting is completed (YES in step S812), and the processing proceeds to step S813. If the OK button has not been selected, it is determined that the setting is not completed (NO in step S812), and the processing returns to step S800.

In step S813, the system control unit 120 hides the newly displayed correction confirmation screen. In other words, the system control unit 120 cancels the display of the correction confirmation screen newly displayed in step S811.

As described above, in the present example, if the user further changes a setting value on the correction confirmation screen, another setting value corrected due to the change in the setting value is displayed using the correction confirmation screen. Thus, the user can further change the other setting value, and thereby can easily recognize that the setting value has been corrected. Further, the user can visually confirm the corrected setting value, and thereby can easily determine whether the setting value is the setting value intended by the user.

### (Second Process)

Fig. 8B depicts the reception process of a setting change of a corrected item and is a detailed flowchart of step S511, wherein correction is not started only by the user changing a setting value on a correction confirmation screen. The correction is made after changes in a plurality of setting values are collectively received, and display is performed again using the correction confirmation screen.

The process of step S820 is similar to the process of step S800, and therefore is not described herein.

In step S821, the system control unit 120 selectably displays, among candidates (options) for the setting value of the selected corrected item, setting values in a range where a change in the setting value of the setting item changed by the user is not involved. More specifically, the system control unit 120 selectably displays setting values in the range where a change in the setting value changed in step S504 is not involved. At this time, unlike step S801 described in the first example, a setting value changed in step S824 (setting value changed in the process of step S824 by the user directly selecting the setting value before the processing loops and reaches step S821) is not taken into account. More specifically, if the setting value of a setting item changed in the process of step S824 needs to be corrected, this setting value is also selectably displayed. Consequently, in the second example, when a correction process is collectively performed in step S826, the priority order of the setting items is prioritized over the order set by the user.

The processes of steps S822 to S824 are similar to those of steps S802 to S804, and therefore are not described herein.

In step S825, the system control unit 120 determines whether the setting is completed. More specifically, the system control unit 120 determines whether the user has selected an OK button (the OK button 705 illustrated in Fig. 7) on the correction confirmation screen displayed in step S510. If the OK button is selected, it is determined that the setting is completed (YES in step S825), and the processing proceeds to the correction process in step S826. If the OK button is not selected, it is determined that the setting is not completed (NO in step S825), and the processing returns to step S820.

Thus, the processing does not proceed to a correction process in step S826 until the OK button is selected. Then, the plurality of setting values displayed in the list display 703 can be changed. More specifically, the system control unit 120 collectively receives changes in the plurality of setting values. This process corresponds to an example of processing by a reception unit.

In step S826, the system control unit 120 performs a correction process. To this process, the flowchart in Fig. 5B can be applied. The correction process is performed in the priority order of the setting items. At this time, even if a plurality of setting values is changed in step S824, a change in the setting value of the setting item given a higher priority is prioritized. Thus, there is a case where the setting value of the setting item given a lower priority among the changed setting values is corrected in a range where the setting value of the setting item given a higher priority is not changed.

The processes of steps S827 to S832 are similar to those of step S806 to 811, and therefore are not described here.

As described above, in the present example, the correction is not started only by the user changing a setting on a correction confirmation screen. The correction is made after changes in a plurality of setting values are collectively received. Thus, the user can change a plurality of corrected setting values at a time. Thus, it is possible to improve operability of changing a setting value.

### (Third Process)

Fig. 9A is a third reception process of a setting change of a corrected item and is a detailed flowchart of step S511. The third process is a process in which, on the already displayed correction confirmation screen, a correction confirmation screen for confirming a newly made correction is added and displayed. Further, a setting item serving as a trigger for making the correction is excluded from a correction target, thereby preventing the setting value corrected by the user from being changed.

The processes of steps S901 to S904 are similar to those of steps S800 and S802 to S804, and therefore are not described herein. An instruction to change the setting value of the corrected item in step S902 is not limited to a setting value in the range where a change in the setting value changed in in step S504 is not involved. A setting value involving a change in the setting value changed in step S504 can also be an option.

In step S905, the system control unit 120 performs a recorrection process. The recorrection process refers to the process of, due to a change in the corrected setting value, correcting the setting value of another setting item. In the recorrection process, the setting value of the setting item serving as a trigger for performing the correction process in step S505, i.e., the setting value changed in step S504 in Fig. 5A, is excluded from a correction target.

Fig. 9B is a flowchart illustrating an example of the recorrection process in step S905. The flowchart in Fig. 9B is obtained by adding steps S922 and S926 to the flowchart in Fig. 5B. The detailed description of the flowchart in Fig. 9B is omitted as appropriate.

In step S921, the system control unit 120 acquires the setting item and the setting value serving as a trigger for performing the correction process. At this time, the setting item serving as a trigger for performing the correction process is the setting item for which the user gives the instruction to change the setting value when the processing proceeds from step S502 to step S503. The system control unit 120 reads the setting item stored in step S504 from the storage unit 112 and thereby can acquire the setting item serving as a trigger for performing the correction process.

In step S922, the system control unit 120 registers the acquired setting item as a correction exclusion item in the storage unit 112. Thus, the setting item serving as a trigger for performing the correction process is registered as the correction exclusion item.

In step S923, the system control unit 120 acquires setting items to be candidates for correction targets and the number of items N. More specifically, the system control unit 120 acquires a list of setting items that are to be checked whether the setting items are to be corrected, and the number of setting items included in the list.

Next, in steps S924 to S929, the recorrection process is actually performed.

In step S925, the system control unit 120 determines whether an n-th setting item that is a candidate for a correction target is a correction target. If the n-th setting item is not the correction target (NO in step S925), the processing proceeds to step S929. Then, the processes are repeated until n reaches the number of items N. On the other hand, if the n-th setting item is the correction target (YES in step S925), the processing proceeds to step S926. At this time, the setting item changed in step S904 is not the correction target.

In step S926, the system control unit 120 determines whether the n-th setting item is registered as the correction exclusion item. If the n-th setting item is not registered as the correction exclusion item (NO in step S926), the processing proceeds to step S927 in which the setting value is corrected. On the other hand, if the n-th setting item is registered as the correction exclusion item (YES in step S926), the processing proceeds to step S929 so that the n-th setting item is not corrected. At this time, the case where the n-th setting item is registered as the correction exclusion item refers to a case where the n-th setting item is a setting item changed by the user on his/her own will. Thus, the processing does not proceed to step S927, so that the system control unit 120 does not correct the setting value of the n-th setting item against the user's intention.

In step S927, the system control unit 120 corrects the setting value of the n-th setting item. At this time, to correct the setting value of the setting item having a large number n, i.e., given a lower priority, the system control unit 120 corrects the setting value in a range where a change in the setting value of the setting item having a smaller number n, i.e., given a higher priority, is not involved. Further, the system control unit 120 corrects the setting value of the n-th setting item in a range where changes in the setting value changed in step S504 and the setting value changed in step S904 are not involved.

In step S928, the system control unit 120 stores the corrected setting value in the storage unit 112.

As described above, in steps S924 to S929, the processes are repeated as many times as the number of items N to be correction targets. If the processes of steps S924 to S929 are completed for all the setting items, the processing returns to the flowchart in Fig. 9A and proceeds to step S906.

In step S906, the system control unit 120 acquires the setting value after being subjected to the recorrection process.

In step S907, the system control unit 120 compares the setting value before the instruction to change the setting value is given, with the setting value after being subjected to the recorrection process. At this time, the setting value before the instruction to change the setting value is given refers to the setting value temporarily stored in the storage unit 112 in step S903.

In step S908, the system control unit 120 determines whether the setting value is corrected. At this time, if the setting value is corrected (YES in step S908), the processing proceeds to step S909. If the setting value is not corrected (NO in step S908), the processing proceeds to step S913.

In step S909, the system control unit 120 extracts a difference between before and after the recorrection process. The difference refers to, for example, in a case where a setting value that is not corrected before the recorrection process is newly corrected in the recorrection process, the newly corrected setting value. In addition, the difference refers to, in a case where the setting value of a setting item that used to be corrected before the recorrection process is no longer corrected due to the recorrection process, conversely, the setting value that is no longer corrected.

In step S910, the system control unit 120 determines whether there is a difference between before and after the recorrection process. If there is a difference (YES in step S910), the processing proceeds to step S911. If there is no difference (NO in step S910), the processing proceeds to step S912.

In step S911, based on the extracted difference, the system control unit 120 generates display data of a correction confirmation screen. More specifically, if there is a newly corrected setting value, then based on the added setting value, the system control unit 120 generates the display data of the correction confirmation screen. On the other hand, if there is a setting value that is no longer corrected, the system control unit 120 generates display data of a correction confirmation screen from which the setting value that is no longer corrected is deleted.

In step S912, the system control unit 120 displays the correction confirmation screen on the display unit 110. If the processing proceeds from step S911 to step S912, the system control unit 120 displays the correction confirmation screen based on the difference generated in step S911. At this time, while continuing to display the correction confirmation screen displayed in step S510, the system control unit 120 additionally displays the correction confirmation screen based on the difference. Thus, two correction confirmation screens are displayed on the display unit 110. To the correction confirmation screen based on the difference, a screen similar to that in Fig. 7 can be applied. On the other hand, if the processing proceeds from step S910 to step S912, the setting item displayed on the correction confirmation screen is the same as the previous setting item. Thus, the system control unit 120 draws the correction confirmation screen displayed in step S510 again by updating the setting value displayed on the correction confirmation screen and displays the correction confirmation screen.

In step S913, the system control unit 120 determines whether the setting is completed. If an OK button is selected, it is determined that the setting is completed (YES in step S913), and the processing proceeds to step S914. If the OK button is not selected, it is determined that the setting is not completed (NO in step S913), and the processing returns to step S901.

In step S914, the system control unit 120 hides the correction confirmation screen.

In step S915, the system control unit 120 initializes the registered correction exclusion item.

As described above, according to the present example, on the already displayed correction confirmation screen, a correction confirmation screen for confirming a newly made correction is added and displayed. Thus, due to a change in a corrected setting value, the user can easily confirm which setting item has a setting value to be newly corrected or which setting item has a setting value that is no longer corrected. Further, according to the present exemplary embodiment, a setting item serving as a trigger for making the correction is excluded from a correction target. Thus, it is possible to prevent a setting value changed by the user from being corrected.

As described above, according to the present exemplary embodiment, due to a change in the setting (setting value) of a first setting item in response to an instruction from the user, the setting (setting value) of a second setting item is corrected. If there is a plurality of corrected settings of second setting items, the plurality of settings of the second setting items is collectively displayed. Thus, the user can easily confirm the automatically corrected setting of the second setting item. Further, the automatically corrected setting of the second setting item is changed in response to an instruction from the user. Thus, if the corrected setting of the second setting item is a setting unintended by the user, the setting can be immediately changed.

According to the present exemplary embodiment, the plurality of settings of the second setting items is displayed in a list. Thus, the user can more easily confirm the automatically corrected setting of the second setting item. Further, according to the present exemplary embodiment, due to a change in the setting (setting value) of the second setting item in response to the instruction from the user, the setting (setting value) of a third setting item is corrected. Thus, the user does not need to correct the setting of the third setting item, where the second setting item and the third setting item mutually influences each other. Thus, it is possible to further improve the operability of changing the setting value.

In steps S502, S802, S822, and S902, the descriptions have been given assuming a case where the user changes the setting value via a key input to the operation unit 111 on the menu screen. However, the present invention is not limited to this case. The same applies to a case where the setting value is changed, for example, by selecting a display item to which a function of changing a setting value is assigned or by selecting an operation member to which the function of changing a setting value is assigned.

In the above exemplary embodiment, a case has been described where, to display the setting of a setting item, a numerical value or a character is displayed as the setting value. However, the present invention is not limited to this case. Alternatively, a display item may be displayed as the setting value.

In the first exemplary embodiment, a case has been described where the correction confirmation screen is temporarily displayed for the user to confirm the corrected setting value. On the other hand, if the user closes and ends the correction confirmation screen once, the correction confirmation screen cannot be displayed again. Thus, it is not possible to handle a case where a user wants to check the corrected setting value again or change the setting value.

In a second exemplary embodiment, even if a correction confirmation screen is closed, the correction confirmation screen can be displayed again so that a corrected setting value can be checked again, or the setting value can be changed again.

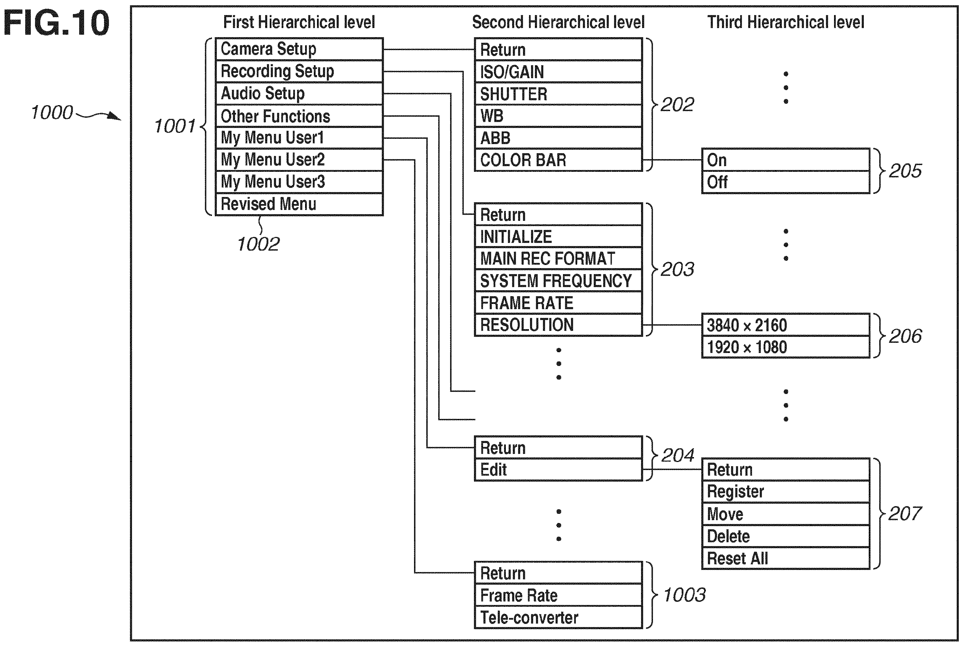

Fig. 10 is a diagram illustrating an example of a configuration of a menu 1000 set in the camera 100. Components similar to those in Fig. 2 are indicated with the same reference signs and are not described herein.

In the configuration of the menu 1000, the first hierarchical level includes one group 1001 constituted of a plurality of items. In this case, the group 1001 is obtained by adding an item "Revised Menu" 1002 to the group 201 in Fig. 2. In "Revised Menu" 1002, a corrected setting item is registered. More specifically, similarly to "My Menu User1" and the like, a setting item can be registered in or deleted from "Revised Menu" 1002. The registration or deletion of the setting item does not need to be performed by the user because the system control unit 120 performs the registration or deletion at a stage of a correction process.

In this case, a group 1003 at the second hierarchical level, which is a lower hierarchical level of "Revised Menu" 1002, includes items "Return", "Frame Rate", and "Tele-converter". In this case, "Frame Rate" and "Tele-converter" are setting items registered as a result of correcting the setting values. As described above, the corrected setting item is registered, whereby even if the user has closed the correction confirmation screen, the user can display the corrected setting item again by selecting "Revised Menu" 1002 on a menu screen.

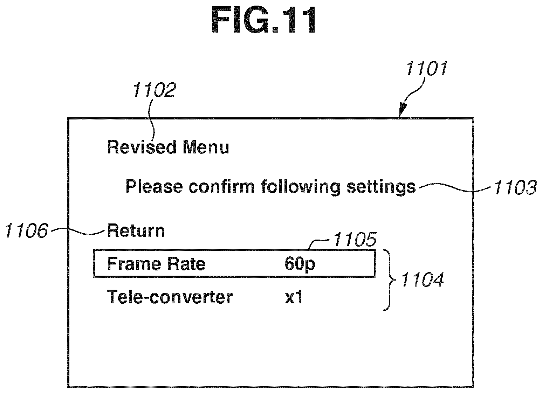

Fig. 11 is a diagram illustrating an example of a Revised Menu screen 1101 as a correction confirmation screen displayed if the user changes a setting value. The Revised Menu screen 1101 is also displayed by selecting "Revised Menu" 1002 on the menu screen as described above.

The Revised Menu screen 1101 includes a title 1102, a message 1103, list display 1104, a selection frame 1105, and a Return button 1106.

The title 1102 indicates the name of the Revised Menu screen 1101.

The message 1103 includes text describing a purpose of displaying the Revised Menu screen 1101.

If there is a plurality of setting values of corrected setting items, the list display 1104 collectively displays the plurality of setting values. The list display 1104 illustrated in Fig. 11 includes the setting item "Frame Rate" and the corrected setting value "60p", and the setting item "Tele-converter" and the corrected setting value "×1". At this time, the system control unit 120 can display the setting items based on items registered in the group 1003 that is at the lower hierarchical level of the "Revised Menu" 1002 in the menu 1000. Further, the system control unit 120 reads setting values set for the setting items and thereby can display the setting values.

The selection frame 1105 is a display item for individually selecting the setting value displayed in the list display 1104 or selecting the Return button 1106.

The Return button 1106 is a button for shifting to an upper hierarchical level.

To change the corrected setting value, the user moves the selection frame 1105 by operating the up and down directional keys of the four-way directional key of the operation unit 111 to select the setting value to be changed from among the setting values displayed in the list display 1104. Similar to a normal menu screen, selectable setting values are displayed corresponding to selection, and the user determines the setting value to be changed. The system control unit 120 changes the setting value to the determined setting value and displays the Revised Menu screen 1101 in Fig. 11 again. At this time, the system control unit 120 displays the setting value by updating the setting value to the changed setting value. The user selects the Return button 1106, whereby the system control unit 120 shifts to the upper hierarchical level and displays a screen.

At this time, to register the corrected setting value, in step S509 in the flowchart illustrated in Figs. 5A and 5B, the system control unit 120 registers the setting item having the corrected setting value in the group 1003, which is at the lower hierarchical level of the "Revised Menu" 1002. Based on the setting item and the setting value registered in the group 1003, which is at the lower hierarchical level of "Revised Menu" 1002, the system control unit 120 generates display data of the Revised Menu screen 1101 illustrated in Fig. 11.

If the setting value is further corrected after the setting value is corrected, the system control unit 120 can display the Revised Menu screen 1101 by updating the already displayed Revised Menu screen 1101 or by newly adding and displaying the Revised Menu screen 1101.

To display the Revised Menu screen 1101 by updating the Revised Menu screen 1101, processes similar to those of steps S810 and S811 in the flowchart in Fig. 8A are performed. More specifically, the system control unit 120 hides the Revised Menu screen 1101 as the already displayed correction confirmation screen and newly displays the Revised Menu screen 1101 as a correction confirmation screen on the display unit 110 based on the corrected setting value.

On the other hand, to additionally display the Revised Menu screen 1101, the system control unit 120 does not perform the process of step S810 in the flowchart in Fig. 8A. More specifically, while the Revised Menu screen 1101 as the already displayed correction confirmation screen remains displayed, the system control unit 120 newly displays the Revised Menu screen 1101 as a correction confirmation screen on the display unit 110 based on the corrected setting value. The setting item corrected and thereby registered in the group 1003, which is at the lower hierarchical level of "Revised Menu" 1002, may be deleted next time the setting value is corrected or may be saved as history information.

As described above, according to the present exemplary embodiment, after the setting (setting value) of a second setting item is hidden, the setting of the second setting item is displayed again in response to an instruction from the user. Thus, after the setting (setting value) of the second setting item is hidden, the user can check the corrected setting value again or change the setting value.

The above exemplary embodiments merely describes exemplary embodiments of the present invention, and the exemplary embodiments and modifications can be appropriately combined together.

The processing described above to be performed by the system control unit 120 may also be performed by a single hardware component or may be shared among a plurality of hardware components (e.g., a plurality of processors or circuits), thereby controlling the apparatus as a whole.

In the above exemplary embodiments, the case has been described where the cursor or the selection frame is moved by operating the four-way directional key of the operation unit 111. However, the present invention is not limited to this case. Alternatively, a configuration may be employed in which a touch operation can be directly performed on the display unit 110. In this case, the user can select from a plurality of setting values displayed in a list by the touch operation.

In the above exemplary embodiments, the case has been described where the present invention is applied to the camera 100. However, the present invention is not limited to this case and is applicable to any electronic device in which setting of a setting item can be changed corresponding to an instruction from a user. More specifically, the present invention is applicable to a personal computer (PC), a smartphone, a tablet terminal, a mobile PC, a personal digital assistant (PDA), a mobile image viewer, a digital photo frame, a music player, a game machine, and an electronic book reader.

The present invention is applicable not only to a camera main body but also to a control apparatus that communicates with an imaging apparatus (including a network camera) through wired or wireless communication and remotely controls the camera main body. Examples of the apparatus that remotely controls the imaging apparatus include apparatuses such as a smartphone, a tablet PC, and a desktop PC. Based on operations performed in the control apparatus or processes performed in the control apparatus, the control apparatus notifies the camera main body of commands to perform various operations and make various settings, and thereby can remotely control the camera main body.

The present invention can also be achieved by performing the following process. This is the process of supplying a program for implementing the functions of the above exemplary embodiments to a system or an apparatus via a network or various recording media, and of causing a computer (a central processing unit (CPU) or a microprocessor unit (MPU)) of the system or the apparatus to read and execute a program code. In this case, the program and a recording medium that stores the program constitute the present invention.

### Other Embodiments

Embodiments of the present invention can also be realized by a computer of a system or apparatus that reads out and executes computer executable instructions recorded on a storage medium (e.g., non-transitory computer-readable storage medium) to perform the functions of one or more of the above-described embodiment(s) of the present invention, and by a method performed by the computer of the system or apparatus by, for example, reading out and executing the computer executable instructions from the storage medium to perform the functions of one or more of the above-described embodiment(s). The computer may comprise one or more of a central processing unit (CPU), micro processing unit (MPU), or other circuitry, and may include a network of separate computers or separate computer processors. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

## Claims

1. An electronic device (100) comprising:
change means for changing (S502, YES) a setting of a first setting item in response to an instruction from a user, and for changing (S505) a setting of a second setting item different from the first setting item due to a change in the setting of the first setting item made by the change means;
display control means for performing control to display (S509) the changed setting of the second setting item and not to display a setting of other setting item that is not changed due to a change in a setting of the first setting item, in a case where the second setting item is changed by the change means due to the change in the setting of the first setting item, and not to display (S508, NO) a setting of a setting item different from the first setting item in a case where the second setting item is not changed by the change means;
control means for performing control to change (S511) the changed setting of the second setting item displayed by the display control means in response to an instruction from the user;
wherein in a case where settings of a plurality of second setting items are changed due to the change in the setting of the first setting item in response to an instruction from the user, the change means corrects the settings of the plurality of second setting items in order of priority; and
wherein in a case where settings of a plurality of second setting items are corrected due to the change in the setting of the first setting item in response to an instruction from the user, the change means is configured to change a setting of a second setting item given a lower priority in a range where a change in a setting of a second setting item given a higher priority is not involved.

2. A method for controlling an electronic device (100), the method comprising:
changing (S502, YES) a setting of a first setting item in response to an instruction from a user, and due to a change in the setting of the first setting item, changing (S505) a setting of a second setting item different from the first setting item;
performing control to display (S509), in a case where a second setting item changed as a result of a change in the setting of the first setting item, a changed setting of the second setting item and not to display a setting of other setting item that is not changed due to a change in a setting of the first setting item, and in a case where the second setting item is not changed, not to display (S508, NO) a setting of a setting item different from the first setting item;
performing control to, in response to an instruction from the user, change (S511) the displayed changed setting of the second setting item;
wherein in a case where settings of a plurality of second setting items are changed due to the change in the setting of the first setting item in response to an instruction from the user, further correcting the settings of the plurality of second setting items in order of priority; and
wherein in a case where settings of a plurality of second setting items are corrected due to the change in the setting of the first setting item in response to an instruction from the user, further changing a setting of a second setting item given a lower priority in a range where a change in a setting of a second setting item given a higher priority is not involved.

3. A program for causing the device according to claim 1 function according to the method of claim 2.

4. A computer-readable recording medium that stores a program for causing the device according to claim 1 function according to the method of claim 2.

## Patentansprüche

1. Elektronische Vorrichtung (100), umfassend:
eine Änderungseinrichtung zum Ändern (S502, YES) einer Einstellung eines ersten Einstellungselements ansprechend auf eine Anweisung von einem Benutzer sowie zum Ändern (S505) einer Einstellung eines vom ersten Einstellungselement verschiedenen zweiten Einstellungselements aufgrund einer durch die Änderungseinrichtung vorgenommenen Änderung der Einstellung des ersten Einstellungselements,
eine Anzeigesteuerungseinrichtung zum Durchführen von Steuerung, um die geänderte Einstellung des zweiten Einstellungselements anzuzeigen (S509) und eine Einstellung eines anderen Einstellungselements nicht anzuzeigen, welches aufgrund einer Änderung einer Einstellung des ersten Einstellungselements nicht geändert wird, falls das zweite Einstellungselement aufgrund der Änderung der Einstellung des ersten Einstellungselements durch die Änderungseinrichtung geändert wird, und eine Einstellung eines vom ersten Einstellungselements verschiedenen Einstellungselements nicht anzuzeigen (S508, NO), falls das zweite Einstellungselement durch die Änderungseinrichtung nicht geändert wird,
eine Steuerungseinrichtung zum Durchführen von Steuerung, um ansprechend auf eine Anweisung vom Benutzer die durch die Anzeigesteuerungseinrichtung angezeigte geänderte Einstellung des zweiten Einstellungselements zu ändern (S511),
wobei, falls aufgrund der Änderung der Einstellung des ersten Einstellungselements ansprechend auf eine Anweisung vom Benutzer Einstellungen mehrerer zweiter Einstellungselemente geändert werden, die Änderungseinrichtung die Einstellungen der mehreren zweiten Einstellungselemente geordnet nach Priorität korrigiert, und
wobei, falls aufgrund der Änderung der Einstellung des ersten Einstellungselements ansprechend auf eine Anweisung vom Benutzer Einstellungen mehrerer zweiter Einstellungselemente korrigiert werden, die Änderungseinrichtung konfiguriert ist, eine Einstellung eines zweiten Einstellungselements mit einer niedrigeren Priorität in einem Bereich zu ändern, in dem eine Änderung einer Einstellung eines zweiten Einstellungselements mit einer höheren Priorität nicht auftritt.

2. Verfahren zum Steuern einer elektronischen Vorrichtung (100), wobei das Verfahren umfasst:
Ändern (S502, YES) einer Einstellung eines ersten Einstellungselements ansprechend auf eine Anweisung von einem Benutzer sowie Ändern (S505) einer Einstellung eines vom ersten Einstellungselement verschiedenen zweiten Einstellungselements aufgrund einer Änderung der Einstellung des ersten Einstellungselements,
Durchführen von Steuerung, um, falls ein zweites Einstellungselement aufgrund der Änderung der Einstellung des ersten Einstellungselements geändert wird, eine geänderte Einstellung des zweiten Einstellungselements anzuzeigen (S509) und eine Einstellung eines anderen Einstellungselements nicht anzuzeigen, welches aufgrund einer Änderung einer Einstellung des ersten Einstellungselements nicht geändert wird, und um, falls das zweite Einstellungselement nicht geändert wird, eine Einstellung eines vom ersten Einstellungselements verschiedenen Einstellungselements nicht anzuzeigen (S508, NO),
Durchführen von Steuerung, um ansprechend auf eine Anweisung vom Benutzer die angezeigte geänderte Einstellung des zweiten Einstellungselements zu ändern (S511),
wobei, falls aufgrund der Änderung der Einstellung des ersten Einstellungselements ansprechend auf eine Anweisung vom Benutzer Einstellungen mehrerer zweiter Einstellungselemente geändert werden, weiterhin die Einstellungen der mehreren zweiten Einstellungselemente geordnet nach Priorität korrigiert werden, und
wobei, falls aufgrund der Änderung der Einstellung des ersten Einstellungselements ansprechend auf eine Anweisung vom Benutzer Einstellungen mehrerer zweiter Einstellungselemente korrigiert werden, weiterhin eine Einstellung eines zweiten Einstellungselements mit einer niedrigeren Priorität in einem Bereich geändert wird, in dem eine Änderung einer Einstellung eines zweiten Einstellungselements mit einer höheren Priorität nicht auftritt.

3. Programm zum Veranlassen der Vorrichtung nach Anspruch 1, nach dem Verfahren gemäß Anspruch 2 zu arbeiten.

4. Computerlesbares Aufzeichnungsmedium, das ein Programm speichert, welches die Vorrichtung nach Anspruch 1 veranlasst, gemäß dem Verfahren nach Anspruch 2 zu arbeiten.

## Revendications

1. Dispositif électronique (100), comprenant :
un moyen de modification destiné à modifier (S502, OUI) un paramètre d'un premier élément de paramétrage en réponse à une instruction provenant d'un utilisateur, et à modifier (S505) un paramètre d'un second élément de paramétrage différent du premier élément de paramétrage en raison d'une modification du paramètre du premier élément de paramétrage effectuée par le moyen de modification ;
un moyen de commande d'affichage destiné à mettre en œuvre une commande ayant pour objet d'afficher (S509) le paramètre modifié du second élément de paramétrage et de ne pas afficher un paramètre d'un autre élément de paramétrage qui n'a pas été modifié en raison d'une modification d'un paramètre du premier élément de paramétrage, dans un cas dans lequel le second élément de paramétrage a été modifié par le moyen de modification en raison de la modification du paramètre du premier élément de paramétrage, et de ne pas afficher (S508, NON) un paramètre d'un élément de paramétrage différent du premier élément de paramétrage dans un cas dans lequel le second élément de paramétrage n'a pas été modifié par le moyen de modification ;
un moyen de commande destiné à mettre en œuvre une commande ayant pour objet de modifier (S511) le paramètre modifié du second élément de paramétrage affiché par le moyen de commande d'affichage en réponse à une instruction provenant de l'utilisateur ;
dans lequel, dans un cas dans lequel des paramètres d'une pluralité de seconds éléments de paramétrage sont modifiés en raison de la modification du paramètre du premier élément de paramétrage en réponse à une instruction provenant de l'utilisateur, le moyen de modification corrige les paramètres de la pluralité de seconds éléments de paramétrage selon un ordre de priorité ; et
dans lequel, dans un cas dans lequel des paramètres d'une pluralité de seconds éléments de paramétrage sont corrigés en raison de la modification du paramètre du premier élément de paramétrage en réponse à une instruction provenant de l'utilisateur, le moyen de modification est configuré pour modifier un paramètre du second élément de paramétrage ayant fait l'objet d'une attribution de priorité plus faible dans une plage dans laquelle une modification d'un paramètre d'un second élément de paramétrage ayant fait l'objet d'une attribution de priorité plus élevée n'est pas impliquée.

2. Procédé pour commander un dispositif électronique (100), le procédé comprenant les étapes consistant à :
modifier (S502, OUI) un paramètre d'un premier élément de paramétrage en réponse à une instruction provenant d'un utilisateur, et en raison d'une modification du paramètre du premier élément de paramétrage, modifier (S505) un paramètre d'un second élément de paramétrage différent du premier élément de paramétrage ;
mettre en œuvre une commande ayant pour objet, dans un cas dans lequel un second élément de paramétrage a été modifié en conséquence d'une modification du paramètre du premier élément de paramétrage, d'afficher (S509) un paramètre modifié du second élément de paramétrage et de ne pas afficher un paramètre d'un autre élément de paramétrage qui n'a pas été modifié en raison d'une modification d'un paramètre du premier élément de paramétrage, et dans un cas dans lequel le second élément de paramétrage n'a pas été modifié, de ne pas afficher (S508, NON) un paramètre d'un élément de paramétrage différent du premier élément de paramétrage ;
mettre en œuvre une commande ayant pour objet, en réponse à une instruction provenant de l'utilisateur, de modifier (S511) le paramètre modifié affiché du second élément de paramétrage ;
dans lequel, dans un cas dans lequel des paramètres d'une pluralité de seconds éléments de paramétrage sont modifiés en raison de la modification du paramètre du premier élément de paramétrage en réponse à une instruction provenant de l'utilisateur, corriger en outre les paramètres de la pluralité de seconds éléments de paramétrage selon un ordre de priorité ; et
dans lequel, dans un cas dans lequel des paramètres d'une pluralité de seconds éléments de paramétrage sont corrigés en raison de la modification du paramètre du premier élément de paramétrage en réponse à une instruction provenant de l'utilisateur, modifier en outre un paramètre d'un second élément de paramétrage ayant fait l'objet d'une attribution de priorité plus faible dans une plage dans laquelle une modification d'un paramètre d'un second élément de paramétrage ayant fait l'objet d'une attribution de priorité plus élevée n'est pas impliquée.

3. Programme destiné à amener le dispositif selon la revendication 1 à fonctionner conformément au procédé de la revendication 2.

4. Support d'informations lisible par ordinateur contenant en mémoire un programme destiné à amener le dispositif selon la revendication 1 à fonctionner conformément au procédé de la revendication 2.
